(19) Europäisches Patentamt / European Patent Office / Office européen des brevets

(11) **EP 1 134 984 B1**

(12) # EUROPEAN PATENT SPECIFICATION

(45) Date of publication and mention
of the grant of the patent:
**12.12.2007 Bulletin 2007/50**

(51) Int Cl.:
*H04N 7/26* (2006.01)  *G06T 9/20* (2006.01)

(21) Application number: **01302458.3**

(22) Date of filing: **16.03.2001**

(54) **Object region data generating method, object region data generating apparatus, approximation polygon generating method, and approximation polygon generating apparatus**

Objektgebietdatenerzeugungsmethode und -vorrichtung, Polygonannäherungsmethode und -vorrichtung

Procédé et dispositif pour générer des données de régions d'objets et pour générer une approximation à l'aide d'un polygone

(84) Designated Contracting States:
**DE FR GB**

(30) Priority: **17.03.2000 JP 2000077161**

(43) Date of publication of application:
**19.09.2001 Bulletin 2001/38**

(73) Proprietor: **KABUSHIKI KAISHA TOSHIBA**
**Kawasaki-shi,**
**Kanagawa-ken 210-8572 (JP)**

(72) Inventors:
• **Masukura, Koichi,**
**IPD, Kabushiki Kaisha Toshiba**
**Tokyo 105-8001 (JP)**
• **Hori, Osamu,**
**IPD, Kabushiki Kaisha Toshiba**
**Tokyo 105-8001 (JP)**
• **Kaneko, Toshimitsu,**
**IPD, Kabushiki Kaisha Toshiba**
**Tokyo 105-8001 (JP)**
• **Mita, Takeshi,**
**IPD, Kabushiki Kaisha Toshiba**
**Tokyo 105-8001 (JP)**
• **Yamamoto, Koji,**
**IPD, Kabushiki Kaisha Toshiba**
**Tokyo 105-8001 (JP)**

(74) Representative: **Midgley, Jonathan Lee**
**Marks & Clerk**
**90 Long Acre**
**London WC2E 9RA (GB)**

(56) References cited:
EP-A- 0 831 654    EP-A- 1 024 667
US-A- 5 760 846    US-A- 5 778 098
US-A- 5 978 510

• KATSAGGELOS A K ET AL: "MPEG-4 AND RATE-DISTORTION-BASED SHAPE-CODING TECHNIQUES" PROCEEDINGS OF THE IEEE, IEEE. NEW YORK, US, vol. 86, no. 6, June 1998 (1998-06), pages 1126-1153, XP000834193 ISSN: 0018-9219
• BASCLE B ET AL: "Tracking complex primitives in an image sequence" PATTERN RECOGNITION, 1994. VOL. 1 - CONFERENCE A: COMPUTER VISION & IMAGE PROCESSING., PROCEEDINGS OF THE 12TH IAPR INTERNATIONAL CONFERENCE ON JERUSALEM, ISRAEL 9-13 OCT. 1994, LOS ALAMITOS, CA, USA,IEEE COMPUT. SOC, 9 October 1994 (1994-10-09), pages 426-431, XP010216038 ISBN: 0-8186-6265-4
• KEVIN O'CONNELL AND DAMON TULL (MOTOROLA): "Motorola MPEG-4 Contour-Coding Tool Technical Description" INTERNATIONAL ORGANIZATION FOR STANDARDIZATION - ORGANISATION INTERNATIONALE DE NORMALISATION, XX, XX, November 1995 (1995-11), page COMPLETE12 XP002102834
• HELD A ET AL: "TOWARDS A HIERARCHICAL CONTOUR DESCRIPTION VIA DOMINANT POINT DETECTION" IEEE TRANSACTIONS ON SYSTEMS, MAN AND CYBERNETICS, IEEE INC. NEW YORK, US, vol. 24, no. 6, 1 June 1994 (1994-06-01), pages 942-949, XP000457325 ISSN: 0018-9472

EP 1 134 984 B1

**Description**

The present invention relates an object region data generating method, an apparatus and an article of manufacture for generating data that indicates a region of an object in a moving picture. In addition, the present invention relates to an approximation polygon generating method and apparatus for generating an approximation polygon having an arbitrary object region approximated in one frame of a moving picture or a still picture.

In recent years, with rapid advancement of image processing technology, a moving picture or a still picture is generally processed as digital data. With this digitization, a technique for efficiently compressing moving picture or still picture data with its large data quantity has been established. In addition, with the development of network technology such as Internet or satellite broadcasting, CATV and the like, a moving picture or still picture database which stores a large amount of moving picture or still picture or a video-on-demand system will be put into a practical stage. Further, an automatic supervisory system from a remote site becomes a major object. In this way, when a moving picture or a still picture is used, there is a variety of demands to classify such moving picture or still picture according to what an object in a moving picture or a still picture.

In order to respond to these demands, technical research for determining what is drawn in a moving picture or a still picture is made. However, both of a background and a plurality of objects exist in a moving picture or a still picture. In order to identify a specific object, it is required to identify such background from objects as preprocessing. At this time, it is required to represent object region data in any shape, and data on object position, size, and shape must be precisely expressed. As a technique for this purpose, for example, there is developed an alpha map representing an image with high brightness of a portion at which an object exists and with low brightness of a portion at which no object exists or a bounding box approximating an object region in rectangular shape. However, alpha map has disadvantages that a large amount of data is required, and a large calculation amount of detection of a position or size of an object is required. In addition, in such bounding box, it is impossible to express a shape of an object.

As a technique to solve these disadvantages, there is a method for approximating an object in a polygonal shape. In this case, only the coordinate of each vertex of a polygon is described, and thus, a remarkably smaller amount of data than that in alpha map is required. In addition, this method is the most suitable to expression of object region data because it has characteristics in which the position, size, and shape of an object is expressed faithfully.

However, conventionally, as a method for approximating an object in a polygonal shape, there has been mainly used a technique in which an inertial main axis of an object is obtained, a point at which the inertial main axis cross an object contour is defined as a vertex, and then, a point on the object contour on which a distance from a line connecting vertexes to which a distance from a line connecting vertexes to each other is the most distant is added as a vertex to obtain a polygon with a required number of vertexes. In this technique, it is required to search a point on an object contour every time an attempt is made to add one vertex. Thus, there has been a disadvantage that a large calculation amount of polygon approximation is required. In addition, a vertex always exists on an object contour, and thus, a segment of line connecting vertexes to each other enters the inside of an object at a protrusion portion of the object. Conversely, a segment of line connecting vertex to each other is expelled to the outside of an object at a recess portion of the object. Thus, there is a problem that a large amount of error between a polygon and an object is required.

In addition, with respect to expression of an object in a moving picture as well, polygon approximation is excellent as compared with alpha map or bounding box or the like from the aspect of data amount or expression of the position, size, and shape of the object for the reason similar to that in still picture. However, if a time-series variation of an object is expressed by polygon approximation, the movement of each vertex that is polygon approximated is described. However, in order to serially record a position of the vertex of each frame, there is a problem that a large amount of data is required, which is inconvenient.

"MPEG-4 and Rate-Distortion-Based Shape-Coding Techniques" by Katsaggelos, A.K. et al, Proceedings of the IEEE, New York, US, Vol. 86 No. 6. June 1998, pages 1126-1153 discloses techniques for shape coding within the MPEG-4 standardisation. This document discloses a framework for the representation of shapes using their contours, and the representations are achieved using curves of various orders.

Accordingly, it is an object of the present invention to provide an object region data generating method and apparatus generating a trajectory of a vertex of an approximation polygon that expresses a region of a desired object in a moving picture with high speed and high precision.

It is another object of the present invention to provide an objection region data generating method and apparatus describing a region of a desired object in a moving picture with a small amount of data, and facilitating generation of such object or data processing.

It is still another object of the present invention to provide an approximation polygon generating method and apparatus generating an approximation polygon that approximates a region of an arbitrary object in one frame of a moving picture or a still picture with high precision and high speed.

According to a first aspect of the present invention, there is provided a method of generating object region data as set out in claim 1. Preferred features of this aspect are set out in claims 2 to 7.

According to a second aspect of the present invention, there is provided an apparatus for generating object region data as set out in claim 8. Preferred features of this aspect are set out in claims 9 to 14.

According to a third aspect of the present invention, there is provided an article of manufacture as set out in claim 15. Preferred features of this aspect are set out in claims 16 to 21.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a view showing an example of an object region data generating apparatus according to a first embodiment of the present invention;

FIG. 2 is a view showing an example of processing procedures in the first embodiment;

FIG. 3 is a flow chart showing an example of polygon generating processing;

FIG. 4 is a view illustrating a polygon generating processing;

FIG. 5 is a view illustrating vertex deletion processing and moving processing of the adjacent vertexes in a processing for generating an approximation polygon;

FIG. 6 is a flow chart showing an example of procedures for vertex association processing;

FIG. 7 is a view illustrating a vertex association process;

FIG. 8A and FIG. 8B are views each illustrating function approximation processing;

FIG. 9 is a view showing an example of a data structure of object region data;

FIG. 10 is a view showing an example of a data structure of approximation polygon data contained in object region data;

FIG. 11 is a view showing an example of a data structure of vertex trajectory data contained in approximation polygon data;

FIG. 12 is a flow chart showing an example of processing procedures in a second embodiment of the present invention; and

FIG. 13 is a view illustrating processing in the second embodiment of the present invention.

A preferred embodiment of an object region data generating method and apparatus and an approximation polygon generating method and apparatus according to the present invention will now be described with reference to the accompanying drawings.

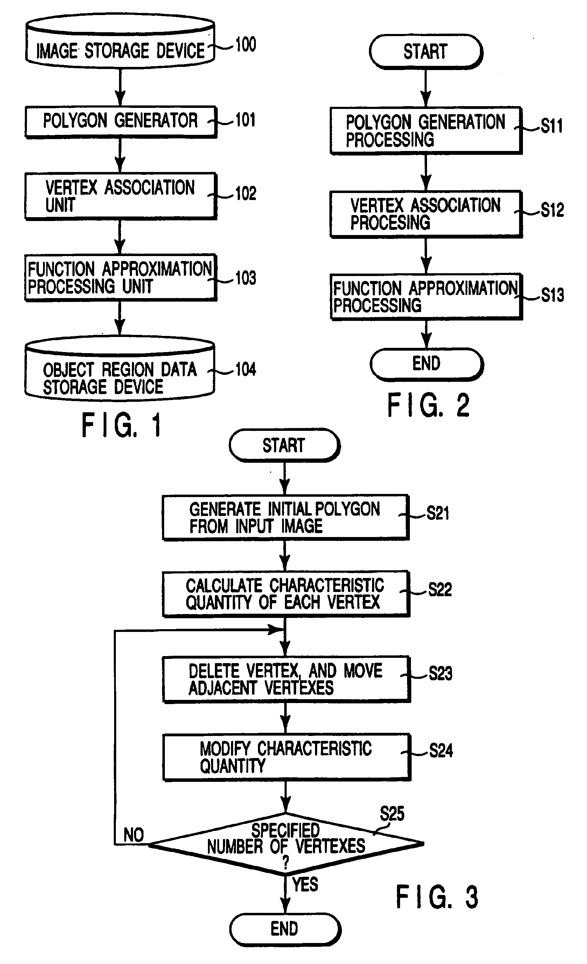

FIG. 1 shows a configuration example of an object region data generating apparatus according to the first embodiment of the present invention. As shown in FIG. 1, this object region data generating apparatus comprises an image storage device 100, a polygon generator 101, a vertex association unit 102, a function approximation unit 103, and an object region data storage device 104.

The image storage device 100 stores image data such as moving picture data or still picture data, and comprises a hard disk or optical disk and a semiconductor memory or the like.

The polygon generator 101 generates a polygon that represents a region of an object to be extracted from among moving picture data with respect to each frame at which such object exists. The term "object" used here denotes, for example, a specific person or animal in an image or any other creatures or manufactures or structural materials such as car or building (or parts of these materials including human head, car chassis, or gate of building). An object is specified by an operator or an object extracting algorithm, such as used for a stereoscopic display. Hereinafter, a polygon representing an area for an object is called an approximation polygon. An approximation polygon is represented by the coordinate (X-Y coordinate group) of each vertex of such polygon.

There are two methods for generating an approximation polygon: a method generating polygons with their identical vertexes in number over all frames with regard to identical objects and a method in which the number of vertexes in a polygon may be different from another every frame.

The vertex association unit 102 associates corresponding vertexes of approximation polygons between adjacent frames in a linked manner with regard to the vertexes of approximation polygons generated over a plurality of frames with regard to each object, and generates a trajectory of the vertexes of the approximation polygons over a plurality of frames with regard to each object. That is, this vertex association processing is performed for each object to be extracted from moving picture data from a frame in which such each object appears over a frame in which it disappears.

For example, when a vertex of an approximation polygon in which a region of an object in a frame is approximated is associated with a vertex of the corresponding polygon of the adjacent frame, thereby obtaining a trajectory of the vertex, a distance between the vertex in one frame and the associated vertex of the adjacent frame may be determined so as to be minimum. Before obtaining this distance, two polygons may be aligned with each other so that their centers of gravity coincide with each other.

In addition, for example, a position of a vertex of the adjacent frame is estimated from a trajectory of the already associated vertex so that a distance between the estimated vertex and a vertex in the adjacent frame may be determined so as to be minimum.

Further, for example, the characteristic quantity in vertexes of a polygon is calculated so that a vertex having its closest characteristic quantity in the adjacent frame may be associated with another vertex.

The function approximation unit 103 performs function approximation for each object with regard to the trajectory of each vertex in an approximation polygon (a series of the coordinates of the corresponding vertexes over a plurality of frames from a frame in which an object appears to a frame in which an object disappears). For example, with respect to each vertex of an approximation polygon of one object, a trajectory of a vertex is expressed as a function of a frame number "f" or a time stamp "t" assigned to a moving picture for each of the X and Y coordinates. Function approximation methods include approximation using a straight line or approximation using a spline curve and the like. The result of function approximation is expressed by a parameter value such as a polynomial coefficient of an approximation function, for example. In this manner, the trajectory of vertexes over a plurality of frames is approximated by a function and the function is expressed by only parameters, thereby a data quantity to be recorded is reduced.

The object region data storage device 104 stores in accordance with a predetermined format, object region data generated by the function approximation unit 103, the data containing data obtained by expressing a time series trajectory of each coordinate of each vertex of the approximation polygon of each object in a function approximation manner (for example, parameter value such as polynomial coefficient of approximation function). As with the image storage device 100 and the like, the object region data storage device 104 also comprises a hard disk or optical disk, a semiconductor memory and the like, for example.

The object region data generated with respect to each object is used when an object is recognized or classified in a moving picture database or a supervisory system and the like.

The image storage device 100 and the object region data storage device 104 may comprise different storage devices or identical storage devices.

FIG. 2 is a flow chart showing an example of the flow of processing using an object region data generating apparatus according to the present embodiment.

A variety of processing procedures include:

(1) a method of performing processing sequentially for each frame by reading one frame to perform a series of processing functions (polygon generation processing, vertex association processing, function approximation processing) at steps S11 to S13, and reading a next frame;

(2) a method of first performing processing for performing polygon generation processing at step S11 with regard to a plurality of frames, performing vertex association processing at step S12 in batch, and performing function approximation processing at step S13; and

(3) a method of first performing polygon generation processing at step S11 with regard to all the target frames, performing vertex association processing at step S12 in batch, and performing function approximation processing at step S13 in batch.

The object region data generating apparatus according to the present embodiment can be implemented using software, of course. In this case, a program may be executed on a computer by creating the program in accordance with the flow chart shown in FIG. 2, for example, and installing it in the computer.

Hereinafter, a description is mainly given to a case in which function approximation using the function approximation unit 103 is performed, thereby reducing a data quantity, and recording object region data. It is possible to record the coordinate value of each vertex of an approximation graphics for each frame in object region data without performing function approximation using the function approximation unit 103 (in the latter case, the function approximation unit 103 may not be provided).

Hereinafter, each of the processing functions in the present embodiment will be described in more detail.

First, polygon generation processing using the polygon generator 101 will be described with reference to FIG. 3 to FIG. 5.

FIG. 3 shows an example of processing procedures for generating an approximation polygon that indicates a region of an object from a frame in which an object exists.

First, at step S21, an initial polygon precisely indicating a region of an object with a plurality of vertexes is generated.

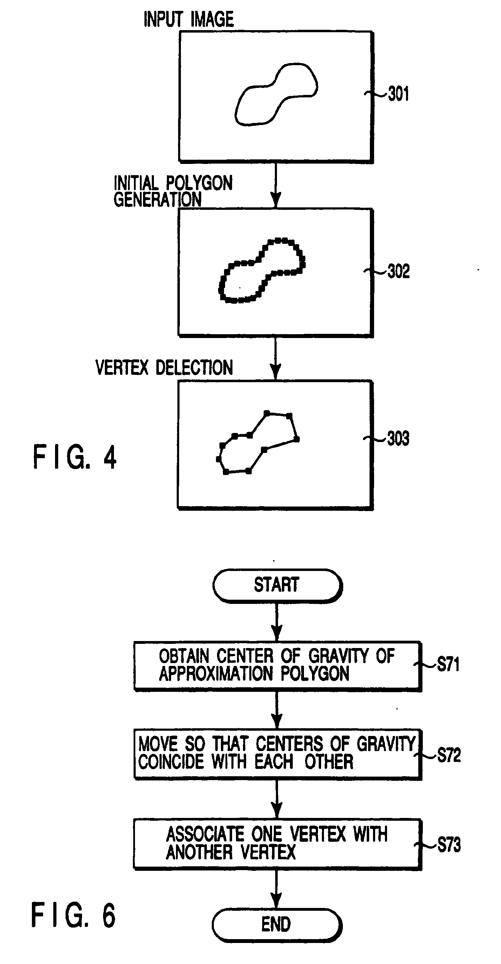

As input images, there may be used a bit map image (alpha map) in which a region in which an object exists is defined as "1" or a region in which an object does not exist is defined as "0"; an edge image obtained by removing a sharp edge from the image; or any other format image as long as a region in which an object exists or a region in which an object does not exist can be identified from each other. An example of input image is shown in an image 301 shown in FIG. 4.

One point on an object contour is searched from the input image, and that point is defined as a vertex of an initial polygon. When this vertex is defined as a start point, while an object contour is traced with a short distance, the vertex on the contour is defined as a vertex, and is sequentially added to the initial polygon. In general, although the initial polygon is formed as a polygon with a very large number of vertexes, a polygon approximation error (for example, difference between an area for an actual object region and an area for the approximation polygon or a value obtained by dividing this difference by the area for the actual object region or the area for the approximation polygon) is small. An example of the initial polygon obtained by the input image 301 is shown in an image 302 shown in FIG. 4. In this case, a large amount of data is required, and then, processing for reducing such amount of data is performed.

At step S22, a characteristic quantity is calculated with regard to each vertex of the obtained initial polygon. The characteristic quantity estimates how much polygon approximation error increases when such vertex is deleted. The characteristic quantity may be an angle formed at such vertex and two vertexes adjacent thereto or an area for a triangle formed at such vertex and two vertexes adjacent thereto.

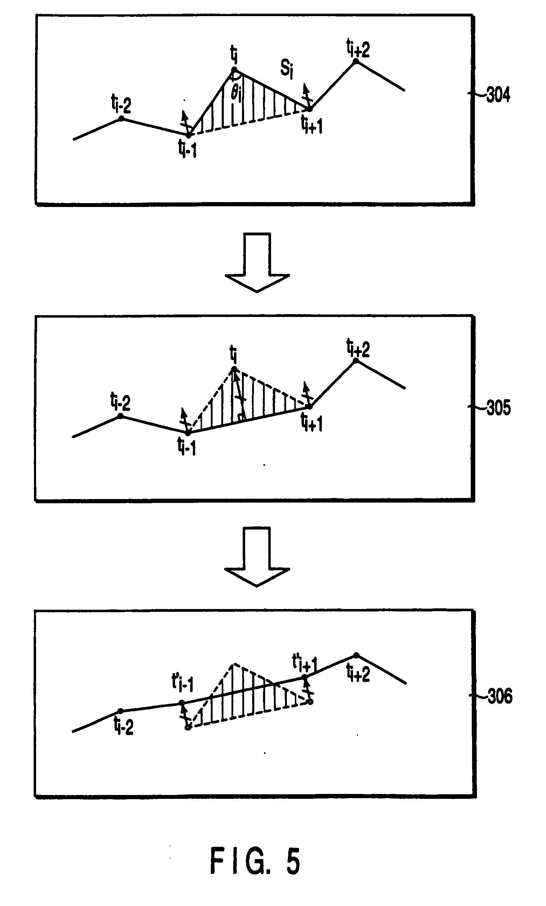

An example of a relationship between a vertex and its characteristic quantity is shown in an image 304 shown in FIG. 5. In the image 304, an angle formed at a vertex ti and two vertex adjacent thereto is defined as $\theta_i$, and an area for a triangle formed at the vertex ti and two vertex adjacent thereto is defined as si.

Where an area si for a triangle is used as a characteristic quantity of vertex $t_i = (x_i, y_i)$, when the adjacent vertexes are defined as $t_{i-1} = (x_{i-1}, y_{i-1})$, $t_{i+1} = (x_{i+1}, y_{i+1})$, the characteristic quantity si is represented by:

$$s_i = | (x_{i+1} - x_i) \cdot (y_{i-1}, y_i) - (x_{i-1}, x_i) \cdot (y_{i+1}, y_i) | / 2$$

If a polygon before deleting a vertex ti well approximates an object, an approximation error increased by deleting the vertex ti is proportional to the characteristic quantity si. Therefore, if the characteristic quantity si is small, even if the vertex ti is deleted, the approximation error is less affected.

At step S23, one vertex at which the smallest polygon approximation error occurs when the vertex is deleted (that is, a vertex having its minimum characteristic quantity si) is selected from the characteristic quantity obtained at step S22, and such vertex is deleted.

If a deleted point corresponds to a protrusion portion of a polygon, there is high possibility that the approximation error produced by deleting a vertex corresponds to an error produced by a polygon entering the inside of an object. In this case, the two vertexes adjacent to the deleted vertex are moved to the outside of the polygon, thereby reducing an approximation error to the minimum.

Conversely, if a deleted point corresponds to a recess portion of a polygon, there is high possibility that the approximation error produced by deleting a vertex corresponds to an error produced by the polygon being expelled to the outside of the object. In this case, therefore, two vertexes adjacent to the deleted vertex is moved to the inside of the polygon, thereby reducing an approximation error to the minimum.

Although a movement vector of the adjacent vertexes may be arbitrary, if the movement quantity is too large, the approximation error increases conversely. Because of this, for example, this vector may be determined from a polygon approximation error or its peripheral vertex coordinates.

In the case of determination from the polygon approximation error, while a movement vector is changed, the best movement vector is searched for (for example, a movement vector with its minimum error is adopted).

In the case of determination from its peripheral vertex coordinate, for example, when a vertex ti is deleted, a movement vector vi of an adjacent vertexes $t_{i-1}$ and $t_{i+1}$ is determined as a vector vertical to a straight line connecting a vertex $t_{i+1}$ to a vertex $t_{i-1}$, the vector having a length that is half of a distance between the straight line connecting the vertex $t_{i+1}$ to the vertex $t_{i-1}$ and a vertex ti. When a vector connecting the vertex ti to the vertex $t_{i-1}$ is defined as $a_i$, and a vector connecting the vertex $t_{i+1}$ to the vertex $t_{i-1}$ is defined as bi, the movement vector vi is expressed as follows.

$$v_i = \{ a_i - (a_i \cdot b_i / |b_i|^2) \times b_i \} / 2$$

where $(a_i.b_i / |b_i|^2) \times b_i$ denotes a positive projection of $a_i$ and bi.

An example of a movement vector of the adjacent vertex when a vertex is deleted is shown in an image 305 shown in FIG. 5, and an example when the adjacent vertexes are moved by movement vector is shown in an image 306 shown in FIG. 5.

The vertexes are deleted, and the adjacent vertexes are moved, whereby there is a need to update the characteristic quantity of a vertex. At step S24, the characteristic quantity of a vertex to be updated is re-calculated. The vertex to be updated is a vertex moved at step S23 (vertexes $t_{i-1}$ and $t_{i+1}$ shown an example shown in FIG. 5) and the

adjacent vertexes thereto ($t_{i-2}$ and $t_{i+2}$ in an example shown in FIG. 5).

At step S25, it is determined whether or not termination conditions are met.

A variety of termination conditions will be described below.

For example, there is a method of using a termination condition as to whether the number of vertexes in an approximation polygon is many more than a specified number. In this case, if the polygon includes the specified number of vertexes or less as a result of deletion of vertexes, processing is terminated. If vertexes equal to or greater than the specified number of vertexes still remains, it returns to step S23 at which steps S23 to S25 are repeated until the polygon includes the specified number of vertexes or less.

In addition, apart from a method of judgment according to whether or not a polygon includes a specified number of vertexes or less, for example, there is a method for specifying a termination condition according to whether or not a polygon approximation error exceeds a threshold. In this case, if the polygon approximation error exceeds such threshold, processing terminates.

Further, an AND or OR combination or the like of a plurality of conditions may be employed.

Where function approximation is performed using the function approximation unit 103, it is preferable that the number of vertexes be equal (there are a method in which the number of vertexes of all objects are identical to each other and a method in which the number of vertexes of objects may be different from each other). Conversely, if function approximation is not performed using the function approximation unit 103, the number of vertexes may not be equal.

An example of an approximation polygon that represents a region of an object obtained by this processing is shown in an image 303 shown in FIG. 4.

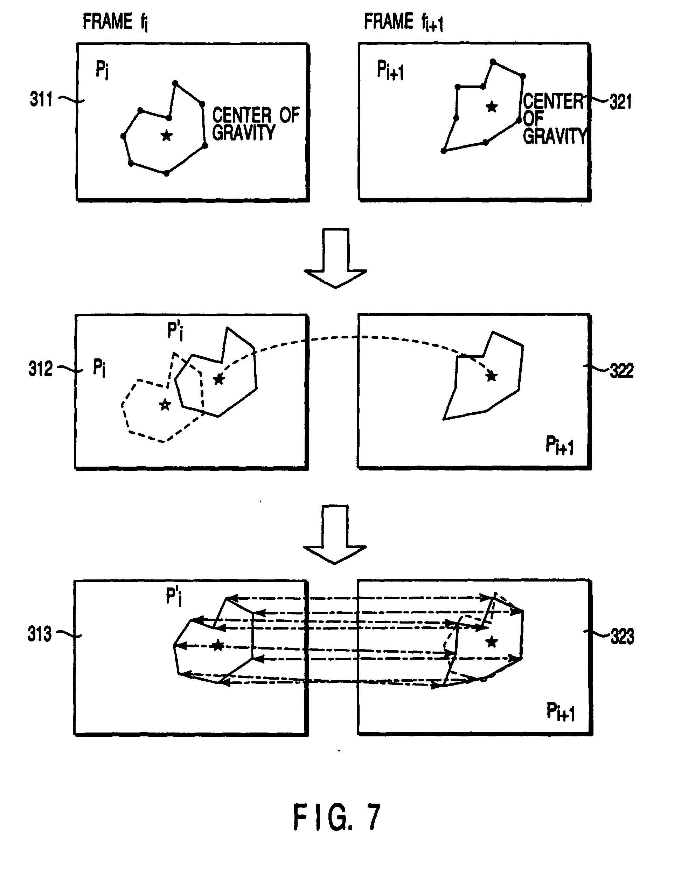

Now, vertex association processing in the adjacent frames using the vertex association unit 102 will be described with reference to FIG. 6 and FIG. 7.

FIG. 6 shows an example of processing procedures for associating each vertex of an approximation polygon that represents a region for each object extracted for each frame.

First, at step S71, when an approximation polygon representing a region of an object in a frame is defined as Pi, and an approximation polygon in a next frame (adjacent frame) of such frame is defined as $P_{i+1}$, the centers of gravity of these polygons Pi and $P_{i+1}$ are obtained. Examples of the approximation polygons Pi and $P_{i+1}$, and the center of gravity obtained therefor are shown in the images 311 and 321 in FIG. 7.

If there are plural objects (its approximation polygons) in the adjacent frame, a distance between the center of gravity of the approximation polygon Pi of the object targeted in the frame and that of each of the approximation polygons in the adjacent frame is calculated, and then, an approximation polygon having its center of gravity that is the shortest in distance among them is defined as an approximation polygon $P_{i+1}$ that corresponds to the object. Of course, the approximation polygons may be associated with each other using one variation of another method.

Next, consider a polygon P'i in which the center of gravity of the approximation polygon Pi in the frame is moved to be positioned at the center of gravity of the approximation polygon $P_{i+1}$ in the adjacent frames. An example of a relationship between each of the polygons Pi, $P_{i+1}$, and P'i and each of their centers of gravity is shown in images 312 and 322 shown in FIG. 7.

However, if a distance between the center of gravity of the approximation polygon Pi and that of the approximation polygon $P_{i+1}$ is short, the center of gravity of the approximation polygon Pi may be defined as P'i without causing movement such that the center of gravity of the approximation polygon Pi coincides with that of the approximation polygon $P_{i+1}$.

At step S73, each vertex of the polygon P'i is associated with each vertex of $P_{i+1}$. An example in which these vertexes are associated with each other is shown in images 313 and 323 shown in FIG. 7.

Hereinafter, examples of a variety of vertex association processing functions will be shown below.

(Method 1: Method for determining based on distance between vertexes)

A distance between a vertex and each vertex of the approximation polygon $P_{i+1}$ in the adjacent frame is obtained for each polygon P'i which has been moved to a position at which the center of gravity thereof coincides with that of the approximation polygon $P_{i+1}$, and a vertex of the polygon $P_{i+1}$ with its shortest distance is defined as a vertex corresponding to such vertex.

As a result of the above processing, if one or more of the vertexes of the polygon $P_{i+1}$ cannot be associated with vertexes of the polygon P'i among the vertexes of the polygon $P_{i+1}$, such vertex is associated with a vertex that is the closest to the vertexes of the polygon P'i (this applies to methods 2 and 3).

(Method 2: Method for determining association based on the shape of a polygon)

The characteristic quantity of each vertex of an approximation polygon in each frame is obtained, and the vertexes with their close characteristic quantities are associated with each other. The characteristic quantities include an area or a vertex angle of a triangle produced at the vertex and the adjacent two vertexes thereto.

(Method 3: Method for estimating a vertex position of a frame to be associated based on the trajectory of vertex)

The trajectory of j-th vertex of the vertexes of polygons $P_1$, ..., Pi associated in frames is approximated by a time function Tj(t); a vertex position in the frame i+1 is estimated based on the function Tj(t); and a vertex that is the closest to the estimated vertex position, of the vertexes of the polygon $P_{i+1}$ in the frame, is defined as a vertex that corresponds to the j-th vertex.

(Method 4)

Where the number of vertexes in the polygon P'$_i$ is equal to that of the polygon $P_{i+1}$, in the above methods (1 to 3) if plural vertexes of the polygon P'$_i$ are associated with same vertex in the polygon $P_{i+1}$ as a result of the processing (that is, if one or more vertexes in the polygon $P_{i+1}$ cannot be associated with the vertexes of the polygon P'$_i$), such association may not be used. In addition, processing may be continued in order to find out another association such that the vertexes of the polygon P'$_i$ are associated with those of the polygon $P_{i+1}$ one-to-one. For example, if plural vertexes of the polygon P'$_i$ are to be associated with the same vertex of the polygon $P_{i+1}$, one proper vertex of the plural vertexes of the polygon P'$_i$ is excluded (to be associated with the vertex of the polygon $P_{i+1}$), and the remaining vertexes are tried to be associated with one that is not associated with the vertex of the polygon P'$_i$ of the vertexes of the polygon $P_{i+1}$.

(Method 5)

In the above methods (1 to 4), in the case of limitation to association such that there does not occur a portion at which the sequence of vertex association is replaced with vertex association (for example, a case in which the vertexes of the polygons in the mutually adjacent frames correspond to each other in the clockwise sequence), when association is obtained such that the sequence of vertex association is not reversed, such association is not be used. Then, processing is continuous so as to find out another association in the sequential order. For example, a part or whole of the association is changed, processing is repeated in a trial and error manner.

(Method 6)

Where the number of vertexes in a polygon P'$_i$ is equal to that of a polygon $P_{i+1}$, if the sequence of vertexes is limited to association in a predetermined order such as the clockwise sequence, for example, there is obtained a shortest distance between each of the vertexes of the polygon P'$_i$ and each of those of the polygon $P_{i+1}$, the vertex of the polygon P'$_i$ is associated with the vertex of the polygon P'$_{i+1}$, and further, the right adjacent vertex of the associated vertex of the polygon P'$_i$ is associated with the right adjacent vertex of the associated vertex of the polygon $P_{i+1}$, and subsequently, such association may be repeated similarly in the clockwise direction. In addition, instead of obtaining one vertex first associated, there is obtained a sum of a distance between vertexes in the case of associating a predetermined number (a plurality) of vertexes adjacent to each other in the polygon P'$_i$ with the same number of vertexes adjacent to each other in the polygon $P_{i+1}$, a correspondence of the predetermined number of vertexes in which such sum is minimum is adopted. Further, the right adjacent vertex of the associated predetermined number of vertexes of the polygon P'$_i$ is associated with that of the polygon $P_{i+1}$, and subsequently, association may be repeated similarly in the clockwise direction. Apart from use of a distance between vertexes for determining a first vertex association, as described above, there can be used a method for using a characteristic quantity or a method for using an estimated vertex position.

(Method 7)

In addition, if the number of vertexes in the polygon P'$_i$ is equal to that in the polygon $P_{i+1}$, in one variation of the above method 1, there is obtained a distance between each of the vertexes of the polygon P'$_i$ which is obtained by moving the approximation polygon in the frame and each of the vertexes of the approximation polygon $P_{i+1}$ in the adjacent frame, so that there may be adopted a combination of association of vertexes such that a sum of distances between all of the vertexes is minimized, of combinations in which the vertexes of the polygon P'$_i$ are associated with those of the polygon $P_{i+1}$ by one-to-one. With respect to the above methods 2 and 3, a similar variation is applicable. In method 2, the sum of a difference in characteristic quantity may be employed, and in method 3, the sum of a distance between an estimated vertex position and an association vertex position may be employed.
Further, at this time, it is possible to consider a condition in which any sequence is not changed as described above, a condition based on one-to-one correspondence, or a condition based on one-to-one correspondence without changing the sequence of vertexes.

With respect to one object, if the number of vertexes in an approximation polygon that represents a region for the object may differ depending on a frame in a duration from a frame in which an object appears to a frame in which an object disappears, the following processing is performed so that the above case can be processed in a manner similar to a case in which the number of vertexes in the polygon $P'_i$ is equal to that in the polygon $P_{i+1}$.

It is assumed that the number of vertexes for obtaining a trajectory, i.e., the number of vertexes of an approximation polygon that represents a region for an object is defined as "s", and the number of vertexes in the approximation polygon in each frame is equal to or smaller than "s". When a frame has a number of vertexes s - $\Delta$s ($\Delta$s > 0), one of the vertexes of the approximation polygon in that frame is regarded as a multiplexed vertex of the $\Delta$s + 1 number of vertexes with their identical coordinates (alternatively, $\Delta$s vertexes are regarded as a multiplexed vertex of two vertexes with their identical coordinates or the other association using a similar technique is performed), whereby processing (methods 1 to 7) can be used in a manner similar to a case in which the number of vertexes is equal. There are a method for performing processing after determining vertexes to be processed in advance as being multiplexed, and a method in which a vertex processed as being multiplied is determined as a result of processing.

It is assumed that the number of vertexes for obtaining a trajectory, i.e., the number of vertexes of an approximation polygon that represents a region for an object is defined as "s", and the number of vertexes in the approximation polygon in each frame is larger than "s". When a frame has a number of vertexes s + $\Delta$s ($\Delta$s > 0), the coordinates with regard to unassociated $\Delta$s number of vertexes of the approximation polygon of that frame is specially recorded as an isolate point; or such data is aborted as an isolate point (the vertexes are processed as an absence), whereby processing (methods 1 to 7) can be used in a manner similar to a case in which the number of vertexes is equal (there is a method for performing processing after determining vertexes to be regarded in advance as an isolate point, and a method in which a vertex regarded as an isolate point are determined as a result of processing).

In addition, if the number of vertexes for obtaining a trajectory, i.e., the number of vertexes of an approximation polygon that represents a region for an object is defined as "s", and the number of vertexes in the approximation polygon in each frame changes from a value smaller than "s" to a value larger than "s", the above processing may be selectively performed in accordance with whether or not the number of vertexes of the approximation polygon in the frame is equal to or smaller than "s" or exceeds "s".

Now, function approximation processing using a function approximation unit 103 will be described below.

When the above polygon approximation and vertex association completes with regard to all frames in which objects exist, the trajectory of each coordinate of each vertex in the approximation polygon of each object is approximated by using a function, thereby reducing an amount of data. As function approximation, there may be employed any approximation technique such as linear approximation, quadric approximation, or spline function approximation.

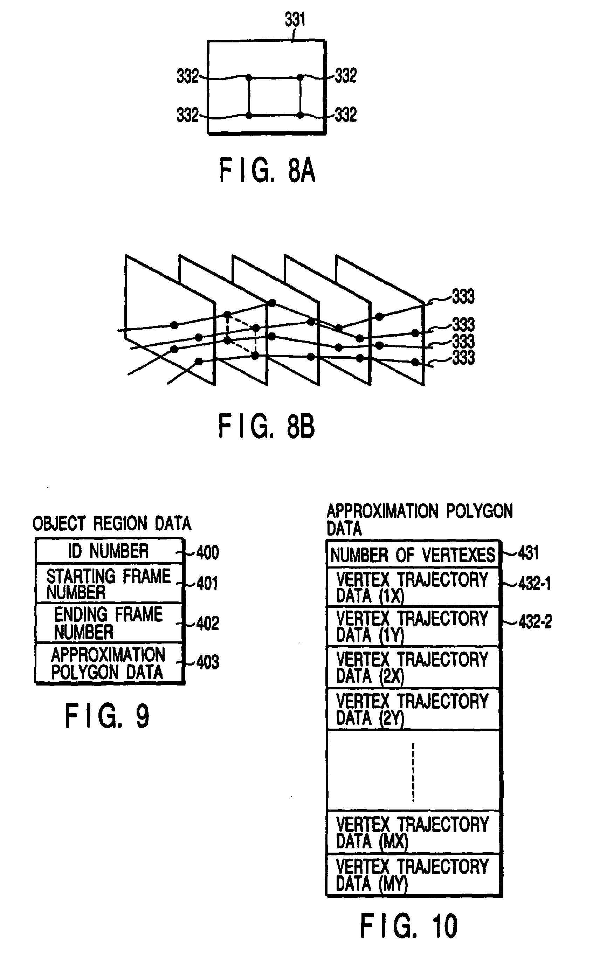

FIG. 8A and FIG. 8B are views each illustrating in more detail an outline of processing for approximating the trajectory of a vertex in an approximation polygon using the function approximation unit 103.

In FIG. 8A, reference numeral 331 designates one frame in a moving picture targeted for processing. Reference numeral 332 denotes each vertex when a region for an object is approximated by a polygon. Here, approximation is assumed to be done by a rectangle (four vertexes) in a series of frames for clarify. In addition, a description will be given, assuming that a spline function is used for function approximation.

In function approximation processing, a trajectory obtained when each vertex of an approximation polygon that represents each object is arranged in time series is approximated based on a spline function for each of the X and Y coordinates. In this example, the spline function in the X and Y coordinates is required for each of the four vertexes that are vertexes of an approximation polygon. Thus, a total of eight spline functions are generated.

Processing using the function approximation unit 103 include: a method for performing processing every time the coordinate value of the vertex of the approximation polygon in each frame concerning a region for the object is obtained (for example, a method for performing approximation every time the coordinate value of the vertex in each frame is obtained, and obtaining an approximation error, and then, properly setting an approximation interval, i.e., a frame interval so that such approximation error is lowered within a predetermined range); or a method for performing processing after the coordinate values of vertexes with regard to all frames concerning a region for the object are obtained.

In addition, depending on a method for performing vertex association processing using the vertex association unit 102, there are a case in which a trajectory of vertexes over all frames from a frame in which a region for the object appears to a frame in which it disappears is obtained (for example, a case in which the number of vertexes of the association polygon is equal over all the frames, and a vertex is associated with another vertex by one-to-one among all adjacent frames); and a case in which a trajectory of a vertex existing only at an interval in some of all the frames from a frame in which a region for the object appears to a frame in which it disappears (for example, a case in which the number of vertexes in an approximation polygon is different depending on the frames, and the trajectory of certain vertexes in a frame with a small number of vertexes is interrupted; or a case in which the trajectory of certain vertexes in such frame is interrupted because the corresponding vertexes in a frame correspond to each other by one-to-one, even if the number of vertexes in an approximation is equal over the all frames). In the latter case, the frame in which the trajectory of vertexes is interrupted is always defined as a node of an approximation function.

In FIG. 8B, reference numeral 333 represents an approximated spline function in a three-dimensional manner.

Data indicating the thus obtained approximation function is recorded in the object region data storage device 104 in accordance with a predetermined data format.

Hereinafter, the data format of object region data stored in the object region data storage device 104 will be described. A description will be given by exemplifying a case in which a vertex is approximated by a spline function. Of course, this is applied to a case in which such vertex is approximated by another function.

FIG. 9 shows an example of the data format of object region data for recording a spline function that represents a region of an object in a moving picture.

ID number 400 is an identification number assigned to each object.

A starting frame number 401 and an ending frame number 402 are first and last frame numbers that define the existence of an object given by the ID number. Specifically, these numbers correspond to the numbers of frames in which an object appears and disappear in a moving picture. However, instead of the numbers of frames in which an object appears and disappears in a moving picture in reality, for example, an arbitrary frame number later than that assigned when an object appears in a moving picture may be assigned as a starting frame number. Similarly, an arbitrary frame number later than the starting frame number and earlier than that assigned when an object disappear in a moving picture may be assigned as an ending frame number. The starting/ending frame numbers can be substituted by the starting/ending time stamps.

Approximation polygon data 403 is trajectory data on vertexes for expressing an approximation polygon (for example, parameter for spline function or the like). Where one object is formed in a plurality of object regions, the approximation polygon data 403 is provided in plurality.

FIG. 10 shows an example of a data structure of approximation polygon data 403.

The number of vertexes 431 indicates the number of vertexes for expressing an approximation polygon.

A pair of vertex trajectory data 432-1 and 432-2 are data regions concerning a spline function for expressing a trajectory of points representative of an approximation polygon. The spline function data on the X and Y coordinates is required for one vertex. Therefore, the vertex trajectory data for specifying such spline function exists by vertex number $M \times 2$. The sequence of vertexes to be recorded may be a predetermined sequence such as a sequential order of the vertexes, for example.

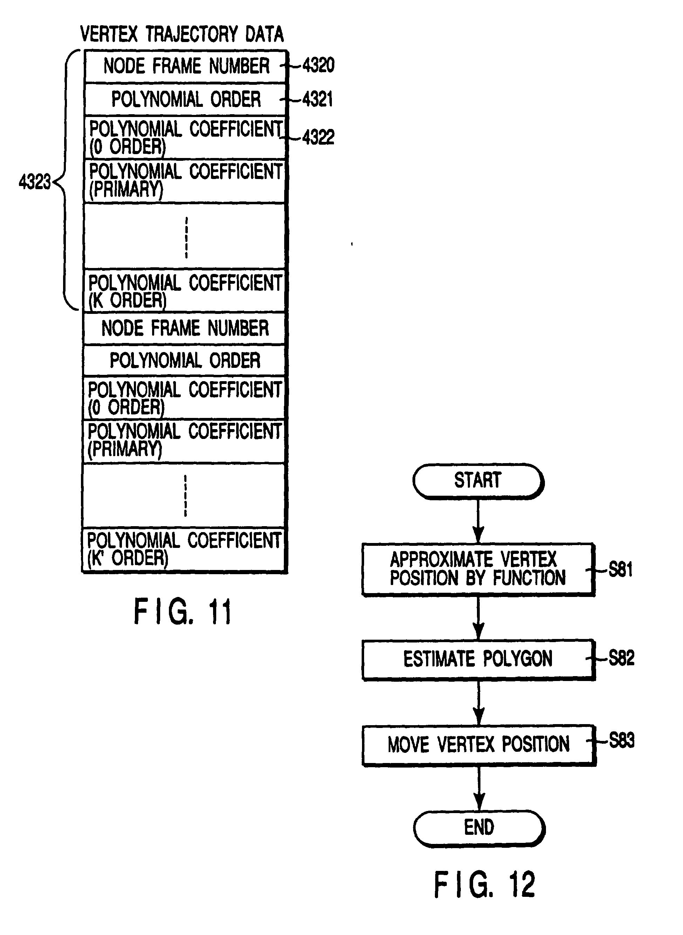

FIG. 11 shows an example of a data structure of vertex trajectory data 432-1 and 432-2.

A node frame number 4320 represents a node of a spline function. This number indicates that polynomial data 4323 is effective up to this node. The number of polynomial coefficient data varies depending on the maximum order of the spline function. If the maximum order is defined as K, the number of coefficient data is defined as K + 1. Thus, reference is made to a polynomial order 4321. The polynomial order 4321 is followed by polynomial coefficient data 4322 in number that corresponds to K + 1.

In addition, a spline function is expressed by a polynomial between each of adjacent nodes, thus requiring polynomials in number that corresponds to the number of nodes. Therefore, data 4323 containing a node frame number 4320, polynomial coefficient 4322 or the like is repeatedly described in plurality. Where a node frame number is equal to a last frame, it means that the data 4323 is the last polynomial coefficient data. Thus, it is found that trajectory data ends.

As in the above mentioned variations, if the coordinate is recorded without causing association with regard to a vertex of an approximation polygon in an adjacent frame, the coordinate of such vertex and its frame number are described in data 4323.

In the meantime, a variety of other items of data may be added to the object region data shown in FIG. 9. For example, there may be added a variety of attribute data associated with an object of the ID number or data (such as file name, URL or any other address) indicating a method of access to associated information data associated with an object of the ID number. Associated information data may be characters, voices, still pictures, moving pictures or a combination thereof; or data describing programs or computer activities.

Where function approximation is not performed using a function approximation unit 103, for example, the coordinate value of each vertex of an approximation graphics in each frame may be recorded as it is in approximation polygon data 403 contained in the object region data shown in FIG. 9.

Now, a method for providing moving picture data or object region data will be described below.

Where the object region data created by the processing according to the present embodiment is provided for a user, it is required to provide object region data by using any method from a creator to a user. The data is provided in a variety of modes as exemplified below.

    (1) moving picture data and its object region data are provided simultaneously by being recorded in one or plural recording media; and
    (2) moving picture data is provided first, and then, object region data is provided simultaneously by being recorded in one or plural recording media.

The above modes are associated with a case in which the data are mainly provided by a recording medium. Otherwise, there can be provided a mode in which part of whole of the data is provided via a communication medium.

As has been described above, according to the present embodiment, there is provided an object region data generating method and apparatus for generating object region data that describes data concerning a region for an arbitrary object in moving picture data, wherein the region for the object in the moving picture data is approximated by using an approximation polygon with regard to each of the plural frames, each of plural vertexes of the approximation polygon in a preceding frame is approximated with a vertex of the approximation polygon in the current frame having a shortest distance between vertexes after the approximation polygon in the current frame is move to make the centers of gravity of both approximation polygons coincide with each other, whereby a trajectory of the associated vertexes is obtained by arranging the vertexes along the sequence of the frames. The object region data is generated based on the trajectory of the obtained plural vertexes.

According to the present embodiment, there is also provided an object region data generating method and apparatus for generating object region data that describes data concerning a region for an arbitrary object in moving picture data, wherein the region for the object in the moving picture data is approximated by using an approximation polygon with regard to each of the plural frames, each of plural vertexes of the approximation polygon in a preceding frame is approximated with a vertex of the approximation polygon in the current frame which is closest to an estimated position of the vertex based on a trajectory of the associated vertexes, whereby a trajectory of the associated vertexes is obtained by arranging the vertexes along the sequence of the frames. The object region data is generated based on the trajectory of the obtained plural vertexes.

According to the present embodiment, there is provided an object region data generating method and apparatus for generating object region data that describes data concerning a region for an arbitrary object in moving picture data, wherein the region for the object in the moving picture data is approximated by using an approximation polygon with regard to each of the plural frames, each of plural vertexes of the approximation polygon in a preceding frame is approximated with a vertex of the approximation polygon in the current frame having a closest characteristic quantity, whereby a trajectory of the associated vertexes is obtained by arranging the vertexes along the sequence of the frames. The object region data is generated based on the trajectory of the obtained plural vertexes.

A vertex association may be limited to a one-to-one association or such an association that the sequence of vertexes is not changed.

According to the present embodiment, there is provided an approximation polygon generating method and apparatus for generating an approximation polygon that approximates a region of an arbitrary object in one frame of a moving picture or an image, wherein a contour of a region of the object in one frame of a moving picture or a still picture is extracted; an initial polygon representing a region of the object is generated based on the extracted contour; a vertex to be deleted is selected based on the characteristic quantity of each vertex of a polygon at that time; the thus selected vertex is deleted; vertexes adjacent to the deleted vertex are moved; and the characteristic quantity of each vertex of the polygon is updated, and the processing is performed until a predetermined ending condition has been met, thereby generating an approximation polygon that approximates the region for the object in the frame.

As the characteristic quantity, there may be used an area for a triangle produced by the deleted vertex and the adjacent two vertexes thereto or an angle produced by the above deleted vertex and the adjacent two vertexes thereto.

As the ending condition, there may be used whether or not the number of vertexes in a polygon becomes smaller than a specified value or whether or not the approximation error value of the approximation polygon and the actual object is greater than the value.

According to the present embodiment, an object in a moving picture is represented as a trajectory of vertexes in an approximation polygon as follows.

A region in which an object exists in each frame is first detected, and an initial polygon is generated from a contour of such region. A vertex less affected by deletion is searched for in a polygon based on the characteristic quantity of each vertex, and is deleted. At this time, an increase of an error caused by vertex deletion is reduced by moving the adjacent vertexes. This processing is repeated until the ending condition has been met, thereby producing a polygon that represents object region data with a smaller number of vertexes.

Since a point on an object contour is searched for with a large amount of calculation only when an initial polygon is produced, this algorithm operates at a higher speed than a conventional algorithm. In addition, there is an advantage that an approximation error is small because a polygon is produced while an vertex is dynamically changed.

Region data with regard to each frame is generated, and vertexes are associated with each other between the adjacent frames, whereby a time-series variation of object is described as a trajectory of vertexes. For example, association is performed so that a distance between the corresponding vertexes is minimized. Then, the trajectory of each vertex is approximated by function, whereby an amount of data is reduced.

In addition, if an attempt is made to generate a trajectory of a vertex every time the object of each frame is inputted, the object region data on a frame to be generated is estimated based on the object region data on the already created frame, and the estimated object region data is deformed according to an object, whereby the trajectory of a vertex is produced.

In this manner, according to the present embodiment, it is possible to approximate the size, shape, movement, deformation or the like, of a region of a desired object in a moving picture, as a polygon, with high precision and high speed. In addition, the region of the desired object in the moving picture is described in a small amount of data, making it possible to facilitate generation of such object and data processing. As a result, in a moving picture database or a supervisory system and the like, this approximated polygon is used for object recognition, classification, search or the like.

In addition, according to the present invention, preferable function approximation is performed even if there is a possibility that the number of vertexes is different depending on each frame or there is a high possibility that vertexes between frames are associated with each other by object deformation or movement.

As has been described above, it is possible to approximate the size, shape, movement, deformation or the like, of a region of a desired object in a moving picture, as a polygon, with high precision and high speed. In addition, the region of the desired object in the moving picture is described in a small amount of data, making it possible to object generation or data processing. As a result, in a moving picture database or a supervisory system and the like, this approximated polygon is used for object recognition, classification, search or the like.

In addition, according to the present embodiment, preferable function approximation is performed even if there is a possibility that the number of vertexes is different depending on each frame or there is a plural possibilities that the vertexes between frames are associated with each other due to an object deformation or movement.

Further, the region for the object in the moving picture is described as a parameter for a curve that approximates a time series trajectory (trajectory of the coordinate of vertexes at which a frame number or a time stamp is defined as a variable). In this manner, the region of the object in the moving picture is expressed by a function parameter, and thus, there can be produced object region data in a small amount of data, the data being easily processed. In addition, an approximation polygon is easily generated from the parameter for the approximation parameter.

The second embodiment of the object region data generating method and apparatus and the approximation polygon generating method and apparatus according to the present invention will now be described with reference to the accompanying drawings.

The present embodiment is basically similar to the first embodiment. Hereinafter, differences from the first embodiment will be mainly described.

In the first embodiment, vertexes of an approximation polygon is obtained from a region of the object in each frame, and then, a correspondence of the vertexes of the approximation polygon is obtained in the adjacent two frames. In the second embodiment, each of the corresponding vertexes of an approximation polygon in a targeted frame is obtained by using the trajectory of each of the corresponding vertexes of the approximation polygon in the already obtained preceding frames. For example, this embodiment is efficient in a case in which processing is performed while a moving picture is inputted in a stream moving picture.

A configuration example of an object region data generating apparatus according to the present embodiment is similar to that shown in FIG. 1.

In addition, an example of processing flow using the object region data generating apparatus according to the present embodiment is similar to that shown in FIG. 2. However, the polygon generation processing at step S11 is performed only for the first frame in which an object appears. Alternatively, with respect to a first predetermined number of frames (several frames), a correspondence of a vertex of an approximation polygon of the current frame and that over a plurality of frames may be obtained in accordance with the processing at steps S11 and S12 in the first embodiment. Subsequently, the vertexes of the approximation polygon in the subsequent frames are obtained one after another in accordance with the processing at step S12 in the present embodiment.

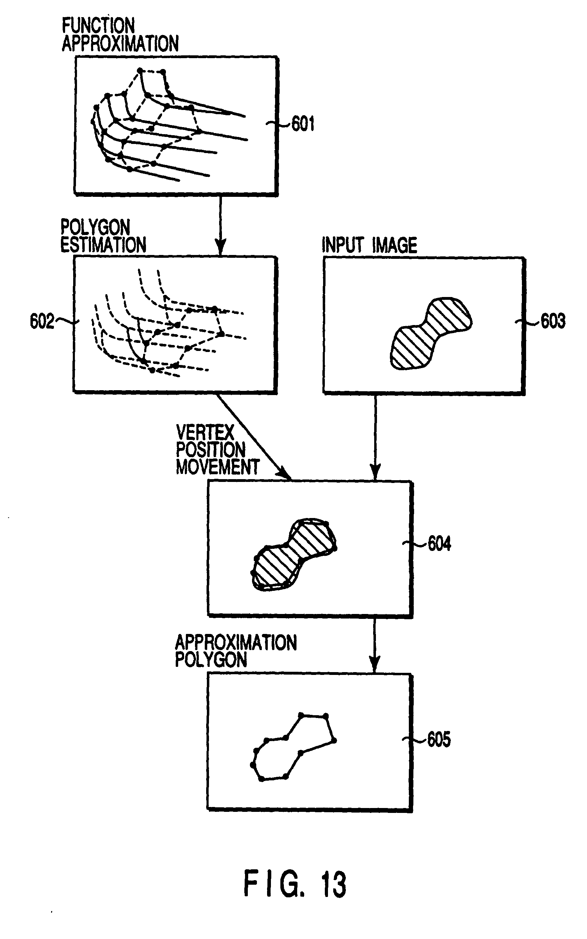

Hereinafter, vertex association processing using a vertex association unit 102 in the present embodiment will be described with reference to FIG. 12 and FIG. 13.

At step S81, with respect to an object, the trajectory of each vertex of an approximation polygons in a plurality of already generated frames (for example, all frames or a predetermined number of closest frames) is approximated as a time-series function, as designated by reference numeral 601 shown in FIG. 13. This function approximation may be performed by using any approximation technique such as linear approximation, quadric approximation or spline approximation.

Next, at step S82, the vertex position in a frame to be processed is estimated based on an approximated function, thereby generating a vertex (vertexes) of a polygon estimated in the frame to be processed. An example of the estimated approximation polygon is designated by reference numeral 602 shown in FIG. 13.

If an object in each frame moves in a small quantity, a vertex (vertexes) of an approximation polygon in the closest frame is (are) employed intact as a vertex (vertexes) of an estimated polygon without performing function approximation.

In addition, if an object in each frame moves in large quantity, but deformation is small in quantity, the center of gravity of the approximation polygon in a frame to be generated is estimated from that of each of the approximation polygons in a plurality of the already generated frames, and then, a polygon obtained by moving an approximation polygon in the closest frame so that its center of gravity coincides with the estimated center of gravity may be used as an estimated approximation polygon.

At an initial stage of processing, if a small number of frames have been processed, the processing at steps S81 and S82 may be performed by a small number of such frames. Alternatively, an approximation polygon in the immediately preceding frame may be used as an estimated polygon without performing approximation at step S81. In addition, if an approximation polygon is first obtained for only one frame or a small number of frames, an approximation in the immediately preceding frame may be used as an estimated polygon without performing approximation at step S81.

Next, at step S83, an object region for a frame to be processed is read, and each vertex of the estimated approximation polygon is moved in accordance with such object region. An example of the object region for a inputted frame to be processed is designated by reference numeral 603 shown in FIG. 13.

There are a variety of moving methods including moving an object to a position on an object contour that is the closest from such estimated position for each vertex or moving an object by using a parameter optimizing method such as gradient approach or Newton approach so as to minimize an approximation error.

If a plurality of objects (i.e., approximation polygons) exist in the adjacent frames, as in the first embodiment, an object region determined to be associated with an object in the targeted frame is used.

An example wherein vertexes are thus moved to be associated with an object is designated by reference numeral 604 shown in FIG. 13. In addition, an example of the moved and generated approximation polygon is designated by reference numeral 605 shown in FIG. 13.

The present embodiment is similar to the first embodiment in function approximation processing using the function approximation unit 103.

In addition, it is possible to record the coordinate value of each vertex of the approximation polygon in each frame as it is in the object region data without performing function approximation using the function approximation unit 103. In the latter case, the function approximation unit 103 may not be provided.

As has been described above, according to the present embodiment, there is provided an object region data generating method and apparatus for generating object region data that describes data concerning a region of an arbitrary object in moving picture data over a plurality of continuous frames, wherein, based on data indicating a trajectory of position data on a plurality of vertexes of an approximation polygon that approximates the region for the object from the already generated starting frame over the immediately preceding frame, position data on a plurality of vertexes of the approximation polygon that approximates the region for the object in the frame to be processed is estimated, and is modified so as to be associated with a region for the object in the frame to be processed, whereby processing is performed for generating data indicating a trajectory of position data on a plurality of vertexes of an approximation polygon that approximates a region for the object from the starting frame to the target frame, and the object region data is generated based on a trajectory of the plurality of vertexes obtained by repeatedly performing such processing over the plurality of frames.

In order to estimate position data on vertexes of an approximation polygon in a frame to be processed, the trajectory of position data on vertexes of the approximation polygon over a plurality of already generated frames is approximated by function so as to estimate the position data on vertexes of the approximation polygon in the already generated closest frame.

In order to estimate position data on vertexes of the approximation polygon, the position data on the vertex of the approximation polygon in the already generated closest frame may be used.

In order to estimate position data on vertexes of the approximation polygon, the position of the center of gravity of the frame may be estimated from the center of gravity of the approximation polygon over a plurality of the already generated frames so as to use the position data on the vertexes of the approximation polygon when the approximation polygon in the already generated closest frame is moved to the positional center of gravity.

As described above, according to the present invention, it is possible to approximate the size, shape, movement, or deformation and the like, of a region of a desired object in a moving picture, as a polygon, with high precision and high speed. In addition, the region for the desired object in the moving picture is described in a small amount of data, making it possible to facilitate object generation or data processing. As a result, in a moving picture database or a supervisory system and the like, the approximated polygon is used for object recognition, classification, search or the like.

Further, according to the present invention, preferable function approximation is performed even if there is a possibility that the number of vertexes differs depending on each frame or there is a high possibility that vertexes between frames are associated with each other by object deformation and movement or the like.

The present invention according to the apparatus is established as that according to the method, and vice versa.

Furthermore, the present invention can be implemented as a computer readable recording medium that records a program for causing a computer to executing predetermined program codes (or causing a computer to function as predetermined means or causing a computer to implement a predetermined function).

As has been described above, according to the present invention, it is possible to approximate a region of a desired object in a moving picture as a polygon with high precision and high speed and the region of the desired object in the moving picture is described in small amount of data, making it possible to facilitate object generation or data processing.

**Claims**

1. A method of generating object region data relating to an object region in at least three frames of moving picture, the at least three frames lined up in a time-series variation, the method comprising:

   generating (S11)a polygon approximating a contour of the object region in each of the at least three frames, the polygon having vertexes; and
   associating (S12)each of the vertexes in each of the at least three frames with each of the same vertexes in an adjacent frame, **characterized by** further comprising:

   obtaining (S 13) trajectories, each of the trajectories linking the same vertexes through the at least three frames; and
   generating (S13) the object region data, the object region data comprising an approximate function data expressing the trajectories.

2. A method according to claim 1, **characterized in that** each of the vertexes in each of the at least three frames are associated with each of the same vertexes in the adjacent frame such that a distance between each of the vertexes in each of the at least three frames and each of the same vertexes in the adjacent frame is minimum.

3. The method according to claim 2, **characterized in that** the distance between each of the vertexes in each of the at least three frames and each of the same vertexes in the adjacent frame is calculated after a center of gravity of the polygon in each of the at least three frames is moved to be positioned at a center of gravity of the polygon in the adjacent frame.

4. The method according to claim 1, **characterized in that** the associating each of the vertexes with each of the same vertexes comprises estimating vertexes in the adjacent frame based on the trajectories, and selecting the vertexes in the adjacent frame, that are closest to the estimated vertexes.

5. The method according to claim 1, **characterized in that** the associating each of the vertexes with each of the same vertexes comprises obtaining a characteristic quantity of the vertexes of each of the at least three frames and associating the vertex in each of the frames and the same vertex in the adjacent frame which have the closest characteristic quantity.

6. The method according to claim 1, 4, or 5, **characterized in that** the trajectories are respectively approximated by predetermined functions, and the object region data is generated by using the functions.

7. The method according to claim 1, 4, or 5, **characterized in that** the object region data includes position data of the vertexes of each of the at least three frames and association data indicting correspondence of the vertexes between the frames.

8. An apparatus for generating object region data relating to an object region in at least three frames of moving picture, the at least three frames lined up in a time-series variation, the apparatus comprising:

   an approximating unit (101) configured to generate a polygon approximating a contour of the object region in each of the at least three frames, the polygon having vertexes; and
   an association unit (102) configured to associate each of the vertexes in each of the at least three frames with each of the same vertexes in an adjacent frame, **characterized by** further comprising:

   a trajectory obtaining unit (103) configured to obtain trajectories, each of the trajectories linking the same vertexes through the at least three frames; and
   an object region data generation unit (103) configured to generate the object region data, the object region data comprising an approximate function data expressing the trajectories.

9. An apparatus according to claim 8, **characterized in that** each of the vertexes in each of the at least three frames are associated with each of the same vertexes in the adjacent frame such that a distance between each of the vertexes in each of the at least three frames and each of the same vertexes in the adjacent frame is minimum.

10. The apparatus according to claim 9, **characterized in that** the distance between each of the vertexes in each of the at least three frames and each of the same vertexes in the adjacent frame is calculated after a center of gravity of the polygon in each of the at least three frames is moved to be positioned at a center of gravity of the polygon in the adjacent frame.

11. The apparatus according to claim 8, **characterized in that** the association unit configured to associate each of the vertexes with each of the same vertexes comprises estimating vertexes in the adjacent frame based on the trajectories, and selecting the vertexes in the adjacent frame, that are closest to the estimated vertexes.

12. The apparatus according to claim 8, **characterized in that** the association unit configured to associate each of the vertexes with each of the same vertexes comprises obtaining a characteristic quantity of the vertexes of each of the at least three frames and associating the vertex in each of the frames and the same vertex in the adjacent frame which have the closest characteristic quantity.

13. The apparatus according to claim 8, 11, or 12, **characterized in that** the trajectories are respectively approximated by predetermined functions, and the object region data is generated by using the functions.

14. The apparatus according to claim 8, 11 or 12, **characterized in that** the object region data includes position data of the vertexes of each of the at least three frames and association data indicting correspondence of the vertexes between the frames

15. An article of manufacture comprising a computer usable medium having computer readable program code means embodied therein, the computer readable program code means generating object region data relating to an object region in at least three frames of moving picture, the at least three frames lined up in a time-series variation, the computer readable program code means comprising:

first computer readable program code means for causing a computer to generate a polygon approximating a contour of the object region in each of the at least three frames, the polygon having vertexes;
second computer readable program code means for causing a computer to associate each of the vertexes in each of the at least three frames with each of the same vertexes in an adjacent frame;
third computer readable program code means for causing a computer to obtain trajectories, each of the trajectories linking the same vertexes through the at least three frames; and
fourth computer readable program code means for causing a computer to generate the object region data, the object region data comprising an approximate function data expressing the trajectories.

16. An article of manufacture according to claim 15, **characterized in that** each of the vertexes in each of the at least three frames are associated with each of the same vertexes in the adjacent frame such that a distance between each of the vertexes in each of the at least three frames and each of the same vertexes in the adjacent frame is minimum.

17. An article of manufacture according to claim 16, **characterized in that** the distance between each of the vertexes in each of the at least three frames and each of the same vertexes in the adjacent frame is calculated after a center of gravity of the polygon in each of the at least three frames is moved to be positioned at a center of gravity of the polygon in the adjacent frame.

18. An article of manufacture according to claim 15, **characterized in that** the second computer readable program code means configured to associate each of the vertexes with each of the same vertexes comprises estimating vertexes in the adjacent frame based on the trajectories, and selecting the vertexes in the adjacent frame, that are closest to the estimated vertexes.

19. An article of manufacture according to claim 15, **characterized in that** the second computer readable program code means configured to associate each of the vertexes with each of the same vertexes comprises obtaining a characteristic quantity of the vertexes of each of the at least three frames and associating the vertex in each of the frames and the same vertex in the adjacent frame which have the closest characteristic quantity.

**20.** An article of manufacture according to claim 15, 18, or 19, **characterized in that** the trajectories are respectively approximated by predetermined functions, and the object region data is generated by using the functions.

**21.** An article of manufacture according to claim 15, 18, or 19, **characterized in that** the object region data includes position data of the vertexes of each of the at least three frames and association data indicting correspondence of the vertexes between the frames.

**Patentansprüche**

**1.** Ein Verfahren des Erzeugens von Objekt-Bereichs-Daten betreffend einen Objekt-Bereich in zumindest drei Rahmen von bewegten Bildern, wobei die zumindest drei Rahmen in einer Zeitreihen-Veränderung gereiht sind, umfassend:

Erzeugen (S11) eines Polygons, welches einen Umriss des Objekt-Bereichs in jedem der drei Rahmen annähert, wobei das Polygon Eckpunkte aufweist; und
Assoziieren (S12) eines jeden der Eckpunkte in jedem der zumindest drei Rahmen mit jedem der gleichen Eckpunkte in einem benachbarten Rahmen,
**gekennzeichnet durch** außerdem Umfassen das:

Gewinnen (S13) von Trajektorien, jede der Trajektorien verbindend die gleichen Eckpunkte über die zumindest drei Rahmen; und
Erzeugen (S13) der Objekt-Bereichs-Daten, die Objekt-Bereichs-Daten umfassend eine die Trajektorien ausdrückende Daten-Näherungs-Funktion.

**2.** Ein Verfahren nach Anspruch 1, **gekennzeichnet dadurch, dass** jeder der Eckpunkte in jedem der zumindest drei Rahmen assoziiert ist mit jedem der gleichen Eckpunkte in dem benachbarten Rahmen in der Weise, dass ein Abstand zwischen jedem der Eckpunkte in jedem der zumindest drei Rahmen und jedem der gleichen Eckpunkte in dem benachbarten Rahmen minimal ist.

**3.** Das Verfahren nach Anspruch 2, **gekennzeichnet dadurch, dass** der Abstand zwischen jedem der Eckpunkte in jedem der zumindest drei Rahmen und jedem der gleichen Eckpunkte in dem benachbarten Rahmen berechnet wird, nachdem ein Schwerpunkt des Polygons in jedem der drei Rahmen bewegt worden ist, um in einem Schwerpunkt des Polygons in dem benachbarten Rahmen positioniert zu sein.

**4.** Das Verfahren nach Anspruch 1, **gekennzeichnet dadurch, dass** das Assoziieren eines jeden der Eckpunkte mit jedem der gleichen Eckpunkte dieses umfasst: das Schätzen der Eckpunkte in dem benachbarten Rahmen, basierend auf den Trajektorien, und das Auswählen derjenigen Eckpunkte in dem benachbarten Rahmen, welche den geschätzten Eckpunkten am nächsten sind.

**5.** Das Verfahren nach Anspruch 1, **gekennzeichnet dadurch, dass** das Assoziieren eines jeden der Eckpunkte mit jedem der gleichen Eckpunkten dieses umfasst: das Gewinnen eines charakteristischen Maßes der Eckpunkte in jedem der zumindest drei Rahmen und das Assoziieren der Eckpunkte in jedem der Rahmen mit den gleichen Eckpunkten in dem benachbarten Rahmen, welche die am engsten übereinstimmenden charakteristischen Maße aufweisen.

**6.** Das Verfahren nach Anspruch 1, 4 oder 5, **gekennzeichnet dadurch, dass** die Trajektorien jeweils durch vorbestimmte Funktionen angenähert werden und die Objekt-Bereichs-Daten durch Verwenden der Funktionen erzeugt werden.

**7.** Das Verfahren nach Anspruch 1, 4 oder 5, **gekennzeichnet dadurch, dass** die Objekt-Bereichs-Daten Positions-Daten der Eckpunkte in jedem der zumindest drei Rahmen und Assoziations-Daten, anzeigend die Korrespondenz der Eckpunkte zwischen den Rahmen, einschließen.

**8.** Eine Apparatur für das Erzeugen von Objekt-Bereichs-Daten betreffend einen Objekt-Bereich in zumindest drei Rahmen von bewegten Bildern, wobei die zumindest drei Rahmen in einer Zeitreihen-Veränderung gereiht sind, die Apparatur umfassend:

eine Näherungs-Einheit (101), konfiguriert um ein Polygon zu erzeugen, welches einen Umriss des Objekt-Bereichs in jedem der zumindest drei Rahmen annähert, das Polygon Eckpunkte aufweisend; und
eine Assoziations-Einheit (102), konfiguriert um jeden der Eckpunkte in jedem der zumindest drei Rahmen mit jedem der gleichen Eckpunkte in einem benachbarten Rahmen zu assoziierten, **gekennzeichnet durch** außerdem Umfassen:

eine Trajektorien-Gewinnungs-Einheit (103), konfiguriert um Trajektorien zu gewinnen, jede der Trajektorien verbindend die gleichen Eckpunkte über die zumindest drei Rahmen; und
eine Objekt-Bereichs-Daten-Erzeugungs-Einheit (103), konfiguriert um die Objekt-Bereichs-Daten zu erzeugen, wobei die Objekt-Bereichs-Daten eine die Trajektorien ausdrückende Daten-Näherungs-Funktion umfassen.

9. Eine Apparatur nach Anspruch 8, **gekennzeichnet dadurch, dass** jeder der Eckpunkte in jedem der zumindest drei Rahmen mit jedem der gleichen Eckpunkte in dem benachbarten Rahmen in einer solchen Weise assoziiert wird, dass ein Abstand zwischen jedem der Eckpunkten in jedem der drei Rahmen und jedem der gleichen Eckpunkte in dem benachbarten Rahmen minimal ist.

10. Die Apparatur nach Anspruch 9, **gekennzeichnet dadurch, dass** der Abstand zwischen jedem der Eckpunkte in jedem der zumindest drei Rahmen und jedem der gleichen Eckpunkte in dem benachbarten Rahmen berechnet wird, nachdem ein Schwerpunkt des Polygons in jedem der zumindest drei Rahmen bewegt worden ist, um in einem Schwerpunkt des Polygons in dem benachbarten Rahmen positioniert zu sein.

11. Die Apparatur nach Anspruch 8, **gekennzeichnet dadurch, dass** die Assoziierungs-Einheit, konfiguriert um jeden der Eckpunkte mit jedem der gleichen Eckpunkte zu assoziieren, dieses umfasst: das Schätzen der Eckpunkte in dem benachbarten Rahmen basierend auf den Trajektorien und das Auswählen derjenigen Eckpunkte in dem benachbarten Rahmen, welche den geschätzten Eckpunkten am nächsten sind.

12. Die Apparatur nach Anspruch 8, **gekennzeichnet dadurch, dass** die Assoziierungs-Einheit, konfiguriert um jeden der Eckpunkte mit jedem der gleichen Eckpunkte zu assoziierten, dieses umfasst: das Gewinnen eines charakteristischen Maßes der Eckpunkte in jedem der zumindest drei Rahmen und das Assoziieren der Eckpunkte in jedem der Rahmen mit den gleichen Eckpunkten in dem benachbarten Rahmen, welche das am engsten übereinstimmende charakteristische Maß aufweisen.

13. Die Apparatur nach Anspruch 8, 11 oder 12, **gekennzeichnet dadurch, dass** die Trajektorien jeweils durch vorbestimmte Funktionen angenähert werden und die Objekt-Bereichs-Daten durch Verwenden der Funktionen erzeugt werden.

14. Die Apparatur nach Anspruch 8, 11 oder 12, **gekennzeichnet dadurch, dass** die Objekt-Bereichs-Daten Positions-Daten der Eckpunkte in jedem der zumindest drei Rahmen und Assoziierungs-Daten, anzeigend die Korrespondenz der Eckpunkte zwischen den Rahmen, einschließen.

15. Ein Herstellungs-Gegenstand umfassend ein Computerverwendbares Medium, darin verkörpert Computer-lesbare Programm-Code-Mittel, erzeugend Objekt-Bereichs-Daten betreffend einen Objekt-Bereich in zumindest drei Rahmen bewegter Bilder, die drei Rahmen gereiht in einer Zeitreihen-Veränderung, die Computer-lesbaren Programm-Code-Mittel umfassend:

erste Computer-lesbare Programm-Code-Mittel für das Veranlassen eines Computers, ein Polygon, annähernd einen Umriss des Objekt-Bereichs in jedem der zumindest drei Rahmen, zu erzeugen, wobei das Polygon Eckpunkte aufweist;
zweite Computer-lesbare Programm-Code-Mittel für das Veranlassen eines Computers, jeden der Eckpunkte in jedem der zumindest drei Rahmen mit jedem der gleichen Eckpunkte in einem benachbarten Rahmen zu assoziieren;
dritte Computer-lesbare Programm-Code-Mittel für das Veranlassen eines Computers, Trajektorien zu gewinnen, jede der Trajektorien verbindend die gleichen Eckpunkte über die zumindest drei Rahmen; und
vierte Computer-lesbare Programm-Code-Mittel für das Veranlassen eines Computers, die Objekt-Bereichs-Daten zu erzeugen, die Objekt-Bereichs-Daten umfassend eine die Trajektorien ausdrückende Daten-Näherungs-Funktion.

16. Ein Herstellungs-Gegenstand nach Anspruch 15, **gekennzeichnet dadurch, dass** jeder der Eckpunkte in jedem der zumindest drei Rahmen assoziiert wird mit jedem der gleichen Eckpunkte in dem benachbarten Rahmen in der Weise, dass ein Abstand zwischen jedem der Eckpunkte in jedem der zumindest drei Rahmen und jedem der gleichen Eckpunkte in dem benachbarten Rahmen minimal ist.

**17.** Ein Herstellungs-Gegenstand nach Anspruch 16, **gekennzeichnet dadurch, dass** der Abstand zwischen jedem der Eckpunkte in jedem der zumindest drei Rahmen und jedem der gleichen Eckpunkte in dem benachbarten Rahmen berechnet wird, nachdem ein Schwerpunkt des Polygons in jedem der zumindest drei Rahmen bewegt worden ist, um in einem Schwerpunkt des Polygons in dem benachbarten Rahmen positioniert zu sein.

**18.** Ein Herstellungs-Gegenstand nach Anspruch 15, **gekennzeichnet dadurch, dass** das zweite Computer-lesbare Programm-Code-Mittel, konfiguriert um jeden der Eckpunkte mit jedem der gleichen Eckpunkte zu assoziieren, dieses umfasst: das Schätzen der Eckpunkte in dem benachbarten Rahmen, basierend auf den Trajektorien, und das Auswählen der Eckpunkte in dem benachbarten Rahmen, welche den geschätzten Eckpunkten am nächsten sind.

**19.** Ein Herstellungs-Gegenstand nach Anspruch 15,
**gekennzeichnet dadurch, dass** das zweite Computer-lesbare Programm-Code-Mittel, konfiguriert um jeden der Eckpunkte mit jedem der gleichen Eckpunkte zu assoziieren, dieses umfasst: das Gewinnen eines charakteristischen Maßes der Eckpunkte eines jeden der zumindest drei Rahmen und das Assoziieren der Eckpunkte in jedem der Rahmen mit den gleichen Eckpunkten in dem benachbarten Rahmen, welche das am engsten übereinstimmende charakteristische Maß aufweisen.

**20.** Ein Herstellungs-Gegenstand nach Anspruch 15, 18 oder 19, **gekennzeichnet dadurch, dass** die Trajektorien jeweils durch vorbestimmte Funktionen angenähert werden und die Objekt-Bereichs-Daten durch Verwenden der Funktionen erzeugt werden.

**21.** Ein Herstellungs-Gegenstand nach Anspruch 15, 18 oder 19, **gekennzeichnet dadurch, dass** die Objekt-Bereichs-Daten Positions-Daten der Eckpunkte in jedem der zumindest drei Rahmen und Assoziierungs-Daten, anzeigend die Korrespondenz der Eckpunkte zwischen den Rahmen, einschließen.

## Revendications

**1.** Procédé de génération de données de régions d'objets concernant une région d'objet dans au moins trois blocs d'image animée, les au moins trois blocs s'alignant dans une variation chronologique, le procédé comprenant :

la génération (S11) d'un polygone se rapprochant d'un contour de la région d'objet dans chacun des au moins trois blocs, le polygone ayant des sommets ; et
l'association (S12) de chacun des sommets dans chacun des au moins trois blocs à à chacun des mêmes sommets dans un bloc adjacent, **caractérisé en ce qu'**il comprend en outre :

l'obtention (S13) de trajectoires, chacune des trajectoires reliant les mêmes sommets à travers les au moins trois blocs ; et
la génération (S13) des données de régions d'objets, les données de régions d'objets comprenant une donnée de fonction d'approximation exprimant les trajectoires.

**2.** Procédé selon la revendication 1, **caractérisé en ce que** chacun des sommets dans chacun des au moins trois blocs est associé à chacun des mêmes sommets dans le bloc adjacent, de sorte qu'une distance entre chacun des sommets dans chacun des au moins trois blocs et chacun des mêmes sommets dans le bloc adjacent soit minimale.

**3.** Procédé selon la revendication 2, **caractérisé en ce que** la distance entre chacun des sommets dans chacun des au moins trois blocs et chacun des mêmes sommets dans le bloc adjacent est calculée une fois qu'un centre de gravité du polygone dans chacun des au moins trois blocs est déplacé pour être positionné au niveau d'un centre de gravité du polygone dans le bloc adjacent.

**4.** Procédé selon la revendication 1, **caractérisé en ce que** l'association de chacun des sommets à chacun des mêmes sommets comprend l'évaluation de sommets dans le bloc adjacent sur la base des trajectoires, et la sélection dans le bloc adjacent, qui sont les plus proches des sommets évalués.

**5.** Procédé selon la revendication 1, **caractérisé en ce que** l'association de chacun des sommets à chacun des mêmes sommets comprend l'obtention d'une quantité caractéristique des sommets de chacun des au moins trois blocs et l'association du sommet dans chacun des blocs et du même sommet dans le bloc adjacent qui ont la quantité caractéristique la plus proche.

**6.** Procédé selon la revendication 1, 4 ou 5, **caractérisé en ce que** les trajectoires sont respectivement approchées par des fonctions prédéterminées, et les données de régions d'objets sont générées en utilisant les fonctions.

**7.** Procédé selon la revendication 1, 4 ou 5, **caractérisé en ce que** les données de régions d'objets comprennent des données de position des sommets de chacun des au moins trois blocs et des données d'association indiquant la correspondance des sommets entre les blocs.

**8.** Appareil de génération de données de régions d'objets concernant une région d'objet dans au moins trois blocs d'image animée, les au moins trois blocs s'alignant dans une variation chronologique, l'appareil comprenant :

une unité d'approximation (101) configurée pour générer un polygone se rapprochant d'un contour de la région d'objet dans chacun des au moins trois blocs, le polygone ayant des sommets ; et
une unité d'association (102) configurée pour associer chacun des sommets dans chacun des au moins trois blocs à chacun des même sommets dans un bloc adjacent, **caractérisé en ce qu'**il comprend en outre :

une unité d'obtention de trajectoire (103) configurée pour obtenir des trajectoires, chacune des trajectoires reliant les même sommets à travers les au moins trois blocs ; et
une unité de génération de données de régions d'objets (103) configurée pour générer des données de réglons d'objets, les données de régions d'objets comprenant une donnée de fonction d'approximation exprimant les trajectoires.

**9.** Appareil selon la revendication 8, **caractérisé en ce que** chacun des sommets dans chacun des au moins trois blocs est associé aux mêmes sommets dans le bloc adjacent de sorte qu'une distance entre chacun des sommets dans chacun des au moins trois blocs et chacun des mêmes sommets dans le bloc adjacent soit minimale.

**10.** Appareil selon la revendication 9, **caractérisé en ce que** la distance entre chacun des sommets dans chacun des au moins trois blocs et chacun des mêmes sommets dans le bloc adjacent est calculée une fois qu'un centre de gravité du polygone dans chacun des au moins trois blocs est déplacé pour être positionné au niveau d'un centre de gravité du polygone dans le bloc adjacent.

**11.** Appareil selon la revendication 8, **caractérisé en ce que** l'unité d'association configurée pour associer chacun des sommets à chacun des mêmes sommets comprend l'évaluation de sommets dans le bloc adjacent sur la base des trajectoires, et la sélection dans le bloc adjacent, qui sont les plus proches des sommets évalués.

**12.** Appareil selon la revendication 8, **caractérisé en ce que** l'unité d'association configurée pour associer chacun des sommets à chacun des, mêmes sommets comprend l'obtention d'une quantité caractéristique des sommets de chacun des au moins trois blocs et l'association du sommet dans chacun des blocs et du même sommet dans le bloc adjacent qui ont la quantité caractéristique la plus proche.

**13.** Appareil selon la revendication 8, 11 ou 12, **caractérisé en ce que** les trajectoires sont respectivement approchées par des foncions prédéterminées, et les données de régions d'objets sont générées en utilisant les fonctions.

**14.** Appareil selon la revendication 8, 11 ou 12, **caractérisé en ce que** les données de régions d'objets comprennent des données de position des sommets de chacun des au moins trois blocs et des données d'association indiquant la correspondance des sommets entre les blocs.

**15.** Article de fabrication comprenant un support utilisable sur ordinateur comportant un moyen de code de programme lisible sur ordinateur incorporé, le moyen de code de programme lisible sur ordinateur générant des données de régions d'objet concernant une région d'objet dans au moins trois blocs d'image animée, les au moins trois blocs s'alignant dans une variation chronologique, le moyen de code de programme lisible sur ordinateur comprenant :

un premier moyen de code de programme lisible sur ordinateur destiné à amener un ordinateur à générer un polygone s'approchant d'un contour de la région d'objet dans chacun des au moins trois blocs, le polygone ayant des sommets ;

un deuxième moyen de code de programme lisible sur ordinateur destiné à amener un ordinateur à associer chacun des sommets dans chacun des au moins trois blocs à chacun des mêmes sommets dans un bloc adjacent ;

un troisième moyen de code de programme lisible sur ordinateur destiné à amener un ordinateur à obtenir des trajectoires, chacune des trajectoires reliant les mêmes sommets à travers les au moins trois blocs ; et

un quatrième moyen de code de programme lisible sur ordinateur destiné à amener un ordinateur à générer les données de régions d'objets, les données de régions d'objets comprenant une donnée de fonction d'approximation exprimant les trajectoires.

16. Article de fabrication selon la revendication 15, **caractérisé en ce que** chacun des sommets dans chacun des au moins trois blocs est associé à chacun des mêmes sommets dans le bloc adjacent de sorte qu'une distance entre chacun des sommets dans chacun des au moins trois blocs et chacun des mêmes sommets dans le bloc adjacent soit minimale.

17. Article de fabrication selon la revendication 16, **caractérisé en ce que** la distance entre chacun des sommets dans chacun des au moins trois blocs et chacun des mêmes sommets dans le bloc adjacent est calculée une fois qu'un centre de gravité du polygone dans chacun des au moins trois blocs est déplacé pour être positionné au niveau d'un centre de gravité du polygone dans le bloc adjacent.

18. Article de fabrication selon la revendication 15, **caractérisé en ce que** le deuxième moyen de code de programme lisible sur ordinateur configuré pour associer chacun des sommets à chacun des mêmes sommets comprend l'évaluation de sommets dans le bloc adjacent sur la base des trajectoires, et la sélection des sommets dans le bloc adjacent, qui sont les plus proches des sommets évalués.

19. Article de fabrication selon la revendication 15, **caractérisé en ce que** le deuxième moyen de code de programme lisible sur ordinateur configuré pour associer chacun des sommets in chacun des mêmes sommets comprend l'obtention d'une quantité caractéristique des sommets de chacun des au moins trois blocs et l'association du sommet dans chacun des blocs et le même sommet dans le bloc adjacent qui ont la quantité caractéristique la plus proche.

20. Article de fabrication selon la revendication 15, 18 ou 19, **caractérisé en ce que** les trajectoires sont respectivement approchées par des fonctions prédéterminées, et les données de régions d'objets sont générées en utilisant les fonctions.

21. Article de fabrication selon la revendication 15, 18 ou 19, **caractérisé en ce que** les données de régions d'objets comprennent des données de position des sommets de chacun des au moins trois blocs et l'association de données indiquant la correspondance des sommets entre les blocs.

IMAGE STORAGE DEVICE ~100

↓

POLYGON GENERATOR ~101

↓

VERTEX ASSOCIATION UNIT ~102

↓

FUNCTION APPROXIMATION PROCESSING UNIT ~103

↓

OBJECT REGION DATA STORAGE DEVICE ~104

FIG. 1

START

↓

POLYGON GENERATION PROCESSING ~S11

↓

VERTEX ASSOCIATION PROCESING ~S12

↓

FUNCTION APPROXIMATION PROCESSING ~S13

↓

END

FIG. 2

START

↓

GENERATE INITIAL POLYGON FROM INPUT IMAGE ~S21

↓

CALCULATE CHARACTERISTIC QUANTITY OF EACH VERTEX ~S22

↓

DELETE VERTEX, AND MOVE ADJACENT VERTEXES ~S23

↓

MODIFY CHARACTERISTIC QUANTITY ~S24

↓

SPECIFIED NUMBER OF VERTEXES ? ~S25 — NO

↓ YES

END

FIG. 3

INPUT IMAGE

~301

INITIAL POLYGON
GENERATION

~302

VERTEX DELECTION

~303

# FIG. 4

START

OBTAIN CENTER OF GRAVITY OF
APPROXIMATION POLYGON ~S71

MOVE SO THAT CENTERS OF GRAVITY
COINCIDE WITH EACH OTHER ~S72

ASSOCIATE ONE VERTEX WITH
ANOTHER VERTEX ~S73

END

# FIG. 6

FIG. 5

FRAME f$_i$

FRAME f$_{i+1}$

P$_i$

311

CENTER OF GRAVITY

P$_{i+1}$

CENTER OF GRAVITY

321

P'$_i$

P$_i$

312

322

P$_{i+1}$

P'$_i$

313

323

P$_{i+1}$

FIG. 7

331

FIG. 8A

FIG. 8B

OBJECT REGION DATA

| | |
|---|---|
| ID NUMBER | 400 |
| STARTING FRAME NUMBER | 401 |
| ENDING FRAME NUMBER | 402 |
| APPROXIMATION POLYGON DATA | 403 |

FIG. 9

APPROXIMATION POLYGON DATA

| | |
|---|---|
| NUMBER OF VERTEXES | 431 |
| VERTEX TRAJECTORY DATA (1X) | 432-1 |
| VERTEX TRAJECTORY DATA (1Y) | 432-2 |
| VERTEX TRAJECTORY DATA (2X) | |
| VERTEX TRAJECTORY DATA (2Y) | |
| ⋮ | |
| VERTEX TRAJECTORY DATA (MX) | |
| VERTEX TRAJECTORY DATA (MY) | |

FIG. 10

VERTEX TRAJECTORY DATA

| |
|---|
| NODE FRAME NUMBER — 4320 |
| POLYNOMIAL ORDER — 4321 |
| POLYNOMIAL COEFFICIENT — 4322<br>(0 ORDER) |
| POLYNOMIAL COEFFICIENT<br>(PRIMARY) |
| ⋮ |
| POLYNOMIAL COEFFICIENT<br>(K ORDER) |
| NODE FRAME NUMBER |
| POLYNOMIAL ORDER |
| POLYNOMIAL COEFFICIENT<br>(0 ORDER) |
| POLYNOMIAL COEFFICIENT<br>(PRIMARY) |
| ⋮ |
| POLYNOMIAL COEFFICIENT<br>(K' ORDER) |

4323

FIG. 11

START

APPROXIMATE VERTEX
POSITION BY FUNCTION — S81

ESTIMATE POLYGON — S82

MOVE VERTEX POSITION — S83

END

FIG. 12

FUNCTION
APPROXIMATION

601

POLYGON
ESTIMATION

602

INPUT IMAGE

603

VERTEX
POSITION
MOVEMENT

604

APPROXIMATION
POLYGON

605

F I G. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KATSAGGELOS, A.K et al.** MPEG-4 and Rate-Distortion-Based Shape-Coding Techniques. *Proceedings of the IEEE,* June 1998, vol. 86, 1126-1153